# EUROPEAN PATENT APPLICATION

(11) **EP 1 873 703 A1**
(43) Date of publication of application: **02.01.2008**
(21) Application number: 07290159.8
(22) Date of filing: 05.02.2007
(51) Int. Cl.: G06Q 10/00

(54) **Systems and methods for assignment generation**

(30) Priority: 29.05.2006 EP 06290880
(71) Applicant: SAP AG, 69190 Walldorf (DE)
(72) Inventor: Rapp, Roman, 06270 Villeneuve Loubet (FR)
(74) Representative: Richardt, Markus Albert

(57) **Abstract**

Systems and methods are provided for generating an assignment between a base business object and a partner business object. In one implementation, the base business object is identified as either a sender business object or a receiver business object to determine a directionality. An assignment creation definition is identified based on an attribute of the base business object and the directionality. The assignment creation definition is evaluated to (i) determine the partner business object and (ii) evaluate a function based on an attribute of the base business object to determine a value of an assignment attribute. An assignment having the assignment attribute is then generated between the base business object and the partner business object.

## Description

### Technical Field

The present invention relates generally to the field of data processing. More particularly, the invention relates to systems and methods that allow a user to generate assignments between business objects.

### Background Information

Businesses analyze and control the use of values of resources, money, or other items by business-related activities to achieve desirable levels of performance. Such an analysis may involve measuring, evaluating, and optimizing these activities to streamline costs or other expenditures of the values. For example, a company can identify factors contributing to loss of revenue and modify its deployment of the values to mitigate the revenue loss. Modeling and analyzing the costs associated with a set of business-related activities, such as designing and manufacturing a product, may be a critical aspect of bringing that product to market. The same can also be said for designing and offering a service.

To evaluate value flows, businesses can use computer-implemented modeling tools that simulate business entities that provide or consume the values, and determine attributes of value flows among these entities. The simulated entities may represent business-related activities. By using such modeling software, a business can simulate, for example, the expected costs associated with the value flows when the activities are performed. The business is thereby able to anticipate and plan for the costs throughout all phases of design and production. In addition, by simulating expected value expenditures, it is possible to vary and control actual value expenditures, such as the cost of materials or labor. For example, by varying the choice of materials, a business can determine the effect of substituting one material for another.

Existing modeling tools for business-related processes, such as the modeling tools provided with enterprise resource planning (ERP) systems, typically implement methodologies and structures that operate discretely. As a result, the environment of value flows may be modeled in a way that is fractional or incomplete, and may therefore produce insufficiently accurate results for business purposes. Moreover, due to the diversity in types of modeling tools, it is often difficult to analyze relationships between the results from one software component and another. For example, an existing modeling tool may be adapted to determine attributes of value flows from value providers to a value consumer by using functions that are based on attributes of the value consumer. However, the modeling tool may not be capable of determining attributes of other value flows by using functions that are based on attributes of a value provider.

Business objects describe complete elementary steps in business processes, such as making a purchase order, providing a product cost estimate, invoicing a customer for a service, etc. The encapsulation of the description of a complete business process step in such a business object reduces complexity because the inner structure of the business object remains concealed.

In order to determine the attributes of value flows between business objects assignments between business objects may be created. In US2006/0230363A1, methods and systems for entering object assignments are disclosed. The disclosure includes a graphical user interface allowing a user to select an object from a first object hierarchy. Once the user has selected an object, the system determines which of the objects in a second hierarchy can be linked to the selected object. These objects are then highlighted and displayed to the user. The user can then select to which of the highlighted objects to link the selected object.

The methods and systems disclosed in US2006/0230363A1 make the task of creating assignments between business objects easier to visualise and control. The assignments still however have to be manually entered by the user.

Thus, it is desirable to have improved systems and methods for automatically creating assignments between business objects..

### SUMMARY

Consistent with embodiments of the invention, systems and methods are provided for automatically creating assignments for business objects to evaluate attributes, such as expenditures of resources, associated with flows of resources among the business objects. Embodiments of the invention may improve the efficiency of calculating these attributes, while overcoming one or more of the aforementioned drawbacks in conventional solutions. Embodiments of the invention include computer-implemented systems and methods, as well as computer readable media including instructions that perform methods consistent with the invention when implemented by a computer or processor.

In accordance with one embodiment, a method is provided of generating an assignment between a base business object and a partner business object in a value flow environment. It is identified whether the base business object is a sender business object or a receiver business object to determine a directionality. An assignment creation definition is identified based on an attribute of the base business object and the directionality. The identified assignment creation definition is evaluated to (i) determine the partner business object and (ii) evaluate a function based on an attribute of the base business object to determine a value of an assignment attribute. An assignment is generated between the base business object and the partner business object, the assignment comprising the assignment attribute.

In accordance with another embodiment, a system is provided for generating an assignment between a base business object and a partner business object in a value flow environment. A deriver identifies whether the base business object is a sender business object or a receiver business object to determine a directionality, and identify the assignment creation definition based on an attribute of the base business object and the directionality. An evaluator evaluates the identified assignment creation definition to (i) determine the partner business object and (ii) evaluate a function based on an attribute of the base business object to determine a value of an assignment attribute. A generator generates an assignment between the base business object and the partner business objects, the assignment comprising the assignment attribute.

In accordance with yet another embodiment, a computer readable medium is provided for performing a method of generating an assignment between a base business object and a partner business object in a value flow environment.

Embodiments of the invention allow the automatic creation of assignments between objects this saves time, and reduces the scope for user error when creating assignments.

Embodiments of the invention allow the centralized modification of assignment creation definitions in a system which can be used by a number of applications. This has the advantage that a common system and language can be used reducing the number of systems and languages with which operators must become familiar. Further, it allows for the central maintenance and modification of assignment creation definitions and facilitates the reuse of assignment creation definitions with different applications.

Embodiments of the invention allow the created assignments to be graphically visualized. The invention thus has the advantage that assignments can be displayed in a form that is easy for the user to understand, without the need for manual modification as was the case in the prior art.

It is to be understood that both the foregoing general description and the following detailed description are exemplary and explanatory only, and should not be considered restrictive of the scope of the invention, as described and claimed. Further, features and/or variations may be provided in addition to those set forth herein. For example, embodiments consistent with the present invention may be directed to various combinations and sub-combinations of the features described in the following detailed description.

Embodiments of the invention are described by the independent claims the dependent claims describe preferred embodiments.

### BRIEF DESCRIPTION OF THE DRAWINGS

The accompanying drawings, which are incorporated in and constitute a part of this specification, illustrate embodiments of the invention and, together with the description, serve to explain advantages and principles of the invention. In the drawings:

Figure 1 is a schematic diagram of an exemplary embodiment, consistent with the present invention, of a service oriented architecture;

Figure 2 is a flowchart of an exemplary embodiment, consistent with the present invention, of a method of creating an assignments;

Figure 3 is a schematic diagram of an exemplary embodiment, consistent with the present invention, of an application platform;

Figure 4 is a schematic diagram of an exemplary embodiment, consistent with the present invention, of a value flow environment containing a base business object, a partner business object, and an assignment between the base business object and the partner business object, partially showing the data structures of the business objects and the assignment;

Figure 5 is a flowchart of an exemplary embodiment, consistent with the present invention, of a method of creating, deriving, and evaluating an assignment creation definition to generate assignments;

Figure 6 is a flowchart of an exemplary embodiment, consistent with the present invention, of a method of evaluating a selected line of an assignment creation definition;

Figure 7 is a schematic diagram of an exemplary embodiment, consistent with the present invention, of a computer that includes a computer readable medium having programmable instructions adapted to create, derive, and evaluate assignment creation definitions to generate assignments; a<nd

Figure 8 is a schematic diagram of an exemplary embodiment, consistent with the present invention of the display of assignments.

### DESCRIPTION OF THE EMBODIMENTS

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions, or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

An application platform can provide a foundation for modeling, analyzing, and controlling flows of values among business objects. The values may include values of, for example, raw material, products, parts, or personnel. The business objects are data structures that represent providers or consumers of values, such as activities involving those values. The data structure is a data container that organizes related items of information. For example, the data structure may be organized as a hierarchical tree having nodes. In one embodiment, the application platform can universally model all phases of, for example, designing and producing a product or service, ranging from standard cost estimates and cost center accounting, such as planning and simulation, through product cost by order or period, such cost object controlling and profitability. Further, users may create new specialized applications without having to use a conventional programming language.

In accordance with one embodiment, by using the application platform, a user may simulate any activity, such as activities that occur in the life cycle of creating and producing a new product or service. For example, when developing a new product, an individual or group may first have a design concept. This first step involves developing the initial design concept to the point that the product is defined in at least a rudimentary fashion. The next step may be to refine the design concept, which is done in a detailed design phase. During the detailed design phase, the specifics of the desired product are determined. This may include deciding not only the specifications of the product, such as size, shape, and components, but also selecting the particular materials or parts that will be used to create the product. The next step is to establish the supply chain, which refers to distributors that a business will use to obtain materials for the product, as well as the process that the business will use to actually create the product. This may involve, for example, creating assembly lines for large products and selecting workers to assemble products. Actual production of the product follows, which includes creating the product and bringing it to market for the lifetime of the product. Other costs may occur after and during this production phase, such as maintenance and service of machines that carry out the production process.

Embodiments of the present invention may be implemented in a service oriented architecture. A service oriented architecture (SOA) is essentially a collection of data processing services. These services can communicate with each other. The communication can involve data passing and/or two or more services coordinating some activity or data processing task.

Examples of SOAs include the Distributed Component Object Model (DCOM) that is based on the Common Object Request Broker Architecture (CORBA). A CORBA-based program can interoperate with any other CORBA-based program across multiple operating systems, programming languages and networks. DCOM is an extension of the Component Object Model (COM). DCOM is designed for use across multiple network transports, including Internet protocols such as HTTP. DCOM works with both Java Applets and activeX components through its use of the COM. SAP's Enterprise Services Architecture (ESA) is another more recent service oriented architecture. ESA takes web services standards and services-oriented architecture principles and extends these to meet the needs of enterprise business solutions. It helps information technology (IT) organizations leverage existing systems to build and deploy flexible solutions that support end-to-end business scenarios across heterogeneous data processing systems.

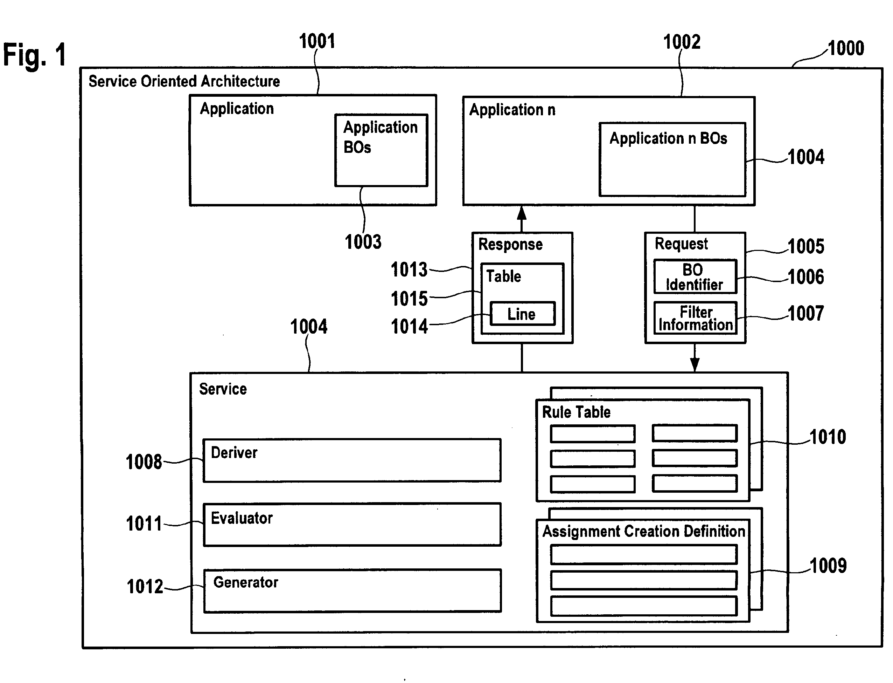

Figure 1 shows a block diagram of an exemplary embodiment of the present invention. A service oriented architecture 1000, comprises a number of applications 1001, 1002. With each of the applications is associated a number of business objects 1003, 1004. The business objects 1003, 1004 may describe elementary steps in business processes. The data of business objects 1003, 1004 may be stored in a database with the business objects being loaded into main memory by an application 1001, 1002, when required. The service oriented architecture 1000 may further comprise a common service 1004. The service 1004 may receive a request 1005 to create an assignment from the application 1002. The request may comprise the identifier 1006 of a base business object and filter information 1007. A deriver 1008 in the service 1004 may identify whether the base business object is a sender or a receiver using the filter information 1007. The deriver may further identify an assignment creation definition 1009 by comparing an attribute of the base business object identified by the identifier 1006 with a rule table 1010. An example of an assignment creation definition is shown in Tables 1 and 2 below, and an example of a rule tables are shown in tables 3a and 3b below. The evaluator 1011 may evaluate the identified assignment creation definition 1009 to determine a partner business object and the value of an assignment attribute. The generator 1012 may generate an assignment between the base business object and the partner business object. The service 1004 may send the assignment to the application 1002 as a response 1013. The response may comprise a line 1014 in a table 1015. Table 1015 may take the form shown in table 6 below.

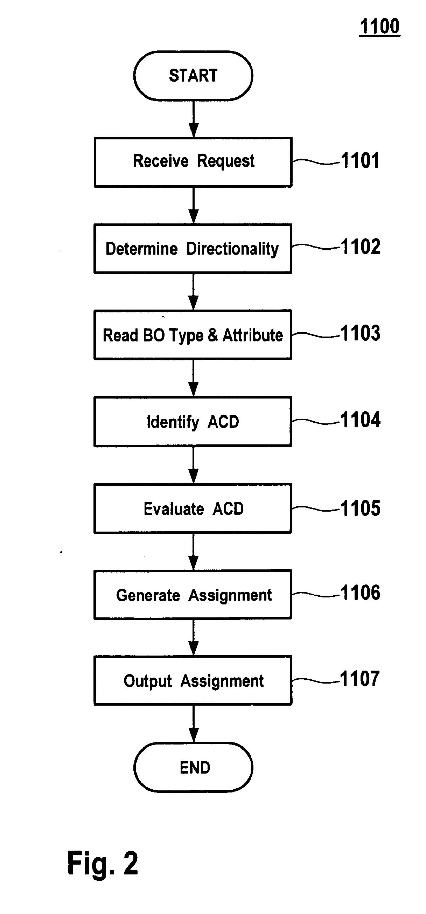

Figure 2 shows a flow diagram 1100 of a method consistent with an embodiment of the present invention, the method may be carried out on the service oriented architecture 1000 shown in figure 1. In step 1101, the service 1004 receives a request 1005 to create an assignment from application 1002. The request may comprise the identifier of a business object and filter information. The filter information may include whether the base business object identified by 1006 is a sender or receiver business object. The filter information may further specify an assignment creation definition or assignment creation definitions to be used by the service to create the assignment. In step 1102, the deriver may determine a directionality from the filter information by identifying whether the base business object is a sender or a receiver business object.

In step 1103, the service then reads the business object type and at least one attribute. The data may be read from the main memory used by the application 1002, or the data may be read from the data store where the business object data is stored. Reading the data from the main memory may have the advantage that it requires less time. In step 1104, an assignment creation definition is identified using the business object type data, the directionality and an attribute of the business object. The assignment creation definition may be identified by using the attribute as a key in a rule table. The rule table may be specific to a business object type and directionality and may take the form shown in tables 3a and 3b below. In step 1105, the assignment creation definition identified in step 1104 may be evaluated. The assignment creation definition may comprise a number of lines and may take the form shown in tables 1 and 2, the evaluation of the assignment creation definition may comprise executing at least one of these lines to determine a partner business object and to evaluate a function based on an attribute of the base business objects. The evaluation of a line in the assignment creation definition may involve reading data such as an attribute of the partner business object from either the main memory used by the application or the database where the master data of the business objects is stored and evaluating a function based on an attribute of the partner business object.

In step 1106, an assignment is generated. The assignment may comprise the attribute calculated in step 1105. In step 1107 the assignment is returned to the application 1002 as a line in a table, the line in the table comprising data identifying the base and partner business objects and the assignment attribute.

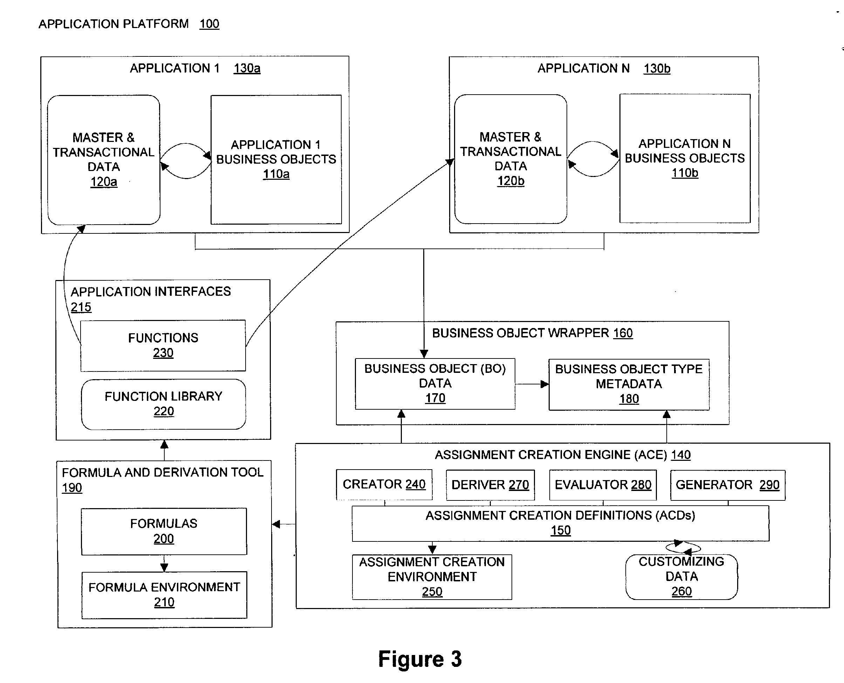

Figure 3 is a block diagram of an exemplary embodiment, consistent with the present invention, of an application platform 100. In order to provide a universal foundation to meet the requirements of a flexible and adaptable value flow model, application platform 100 may create a value flow environment. The value flow environment is a virtual environment that contains one or more elements, such as business objects (BOs) 110a, 110b, assignments between BOs 110a, 110b, and tables containing data. The value flow environment may further comprise applications 130a, 130b that operate on BOs 110a, 110b, respectively, such as by using of modifying BOs 110a, 110b. In addition, the value flow environment may include functions, formulas, and/or tables.

Application platform 100 may use metadata to define BO types, assignment types, and/or the tables in the value flow environment. As will be appreciated by those skilled in the art, metadata is data that describes other data. For example, metadata may describe how, when, and by whom a particular set of data was collected, as well as how the data is formatted. Individual instances of the BOs 110a, 110b, and assignments can each be associated with data in the form of attributes. The attributes may be freely defined or can be selected at the time of configuration from data elements stored in a database. Such attributes may comprise, for example, values, characteristics, or key figures (i.e., numerical values).

The attributes of BOs 110a, 110b may comprise master data and/or transactional data 120a, 120b. The master data is essential data that is related to its BO. The master data may include, for example, a production order identification (ID) or produced materials. The transactional data, on the other hand, is periodic data related to the operation of an application on the BO that is associated with the transactional data. The transactional data may include, for example, a confirmation that specified steps have been performed.

Application platform 100 may comprise an assignment creation engine (ACE) 140 to manage the generation of the assignments for BOs 110a, 110b. The assignments may also be referred to as "edges." Each of the assignments is a directed link from a first BO, referred to as the sender BO, to a second BO, referred to as the receiver BO. The sender BO may be a provider of a value and the receiver BO may be a consumer of the value such that there is a flow of the value from the sender BO to the receiver BO. The value may be a value of, for example, money or resources such as materials, parts, or labor. The sender BO may be, for example, a cost center or project. The receiver BO may be, for example, a production order.

The assignment may include one or more attributes, such as characteristics or key figures, that describe the value flow. In one example, the sender BO is a cost center or project, and the receiver BO is a production order. In this example, one of applications 130a, 130b triggers ACE 140 to create an assignment between the sender BO and the receiver BO to contain a calculated overhead surcharge associated with the flow of a quantity of material from the cost center or project to the production order.

ACE 140 is used to create assignment creation definitions (ACDs) 150 that define how the assignments are to be automatically generated. When one of applications 130a, 130b is executed, that application can trigger ACE 140 to assign ACDs 150 to particular instances of BOs 110a, 110b selected by the application, and evaluate ACDs 150 for those instances of BOs 110a, 110b. ACDs 150 can be evaluated based on the master data and/or transactional data 120a, 120b of those instances of BOs 110a, 110b. Application platform 100 may also include a BO wrapper 160 to interface between ACE 140 and BOs 110a, 110b. The BO wrapper 160 can comprise data 170 about BOs 110a, 110b and metadata 180 about the BO types to facilitate exchange of information between ACE 140 and BOs 110a, 110b.

Application platform 100 may further comprise a formula and derivation tool 190 to manage formulas 200. Formulas 200 may comprise, for example, formulas, rules, or instructions. Formulas 200 may be executed by applications 130a, 130b or ACE 140. For example, formulas 200 may include the formulas used by ACD 150 to determine partner BOs in relation to a base BO. Formula and derivation tool 190 may comprise a formula environment 210 to define formulas 200. Formula environment 210 may comprise a user interface, such as a GUI, through which an operator, such as a human operator, can enter formulas 200.

In addition, application platform 100 may comprise application interfaces 215, such as a function library 220 to store functions 230 that can operate on the attributes of BOs 110a, 110b. These functions may comprise, for example, algorithms, formulas, rules, pointers, or other functions.

ACE 140 may include a creator 240 to create one or more of ACDs 150, each of which comprises executable "lines" that generate assignments upon execution. For example, an operator, such as a human operator using a GUI, may use ACE 140 to construct an ACD that will generate assignments containing desired attributes whose values are evaluated at the time of execution. The lines may have columns that define cells for each of the lines. The lines and columns of the ACD may together be referred to as a "template." For example, the lines of ACDs 150 may identify partner BOs and specify functions in an abstract form to generate the attributes. ACDs 150 may exist in an assignment creation environment 250, which may also support ACDs 150 by providing background information. For example, assignment creation environment 250 may contain rules and/or tables with particularized data. ACDs 150 may also interact with customizing data 260 to further adapt ACDs 150 to particular applications.

Individual ACDs 150 may comprise a series of lines, each of which can be executed when ACD 150 is evaluated. Each of the lines may include a plurality of columns that define cells of the line. ACDs 150 can be represented in a tabular form wherein the different lines share columns from top to bottom and form rows of the table, such as that represented by the exemplary template shown in Table 1 below. Further, each of the lines may include an associated line identifier (ID), as shown in Table 1.

**Table 1**

| **Line ID** | **Line Type** | **Line Activation** | **Comment** | **Object** | **Further Characteristics 1...m** | **Key Figure 1...m** |
|---|---|---|---|---|---|---|
| 1 | Type1 | Rule 1 | Text 1 | Rule 1 | CharFormulas 1...m.1 | KeyFigFormulas 1...m.1 |
| ... | ... | ... | | ... | | |
| n | Type n | Rule n | Text n | Rule n | CharFormulas 1...m.n | KeyFigFormulas 1...m.n |

The lines of ACD 150 may also have a "Line Type" column. The individual Line Type cells may designate whether the individual lines are generation lines, which generate assignments upon execution, or non-generation lines, which do not generate assignments upon execution. For example, the Line Type cell of a generation line may contain a "Cost Center" element and the Line Type cell of a non-generation line may contain a "Calculation Row" element, as shown in the example of Table 2 below. The "Calculation Row" lines are executed to evaluate a formula such that a numerical value resulting from the formula can later be used by a generation line such as one of the "Cost Center" lines. Each of the "Cost Center" lines is executed to retrieve calculations from the "Calculation Row" lines and/or perform its own calculation in order to create an assignment between base BO and partner BOs. In addition, the Line Type cell may include a "Sub-ACD" element that re-uses an existing ACD as a component in the present ACD.

In addition, the individual lines may have a "Line Activation" cell that makes execution of the line conditional upon a logical expression. If the Line Activation cell is empty or not present, then the line may be executed unconditionally. However, if the Line Activation cell is present and contains a logical expression, then the logical expression is evaluated: if the logical expression returns a TRUE value, then the line is executed; but if the logical expression returns a FALSE value, then the line is not executed.

The next column shown in Table 1 is a "Comment" column, which can be used to include a textual comment in a line to describe that line to an operator, such as a human operator. For example, the Comment cell of a line may describe the purpose of the line for the benefit of the human operator.

Furthermore, the lines may comprise an "Object" column to refer to a partner object to which the generated assignment will relate. The Object cell may contain a unique identifier (ID) that is a static ID, such as a project ID, or a rule that is to be evaluated to identify the partner object. If the line has a Line Type cell that contains "Sub-ACD," then the Object cell may contain an identifier of another ACD that is being used as a component of the present ACD containing this line.

The lines may also comprise one or more "Attribute" columns. The Attribute cell of each line may contain a function that can be evaluated to determine a value of an attribute. When the ACD comprises multiple lines, then the Attribute column may comprise a plurality of functions that are arranged to be computed sequentially. For example, the Attribute columns may include one or more "Characteristics" columns that contain characteristics and/or "Key Figures" columns that contain key figures. In the example shown in Table 2, the Characteristics column is an "Account" column, and the Key Figures column is a "Costs" column.

A particular example of an ACD, corresponding to the template of Table 1, is shown as Table 2 below. In this example, the application that will trigger the ACE to derive this ACD is an overhead surcharge application. A quantity flows from sender objects, which are cost centers in this example, to a receiver object, which may be a production order in this example. This exemplary ACD is receiver-based since the overhead surcharge application triggers the derivation of the ACD based on attributes of the production order that has been entered. The object column lists partner objects that are the cost centers, such as a materials cost center (MatSC), labor cost center (LabSC), administrative cost center (AdmSC), and sales cost center (SaISC).

**Table 2**

| **Line ID** | **Line Type** | **Line Activation** | **Comment** | **Object** | **Account** | **Costs** |
|---|---|---|---|---|---|---|
| 1 | Calculation Row | | Material Costs | | | CostComponentValue (ReceiverObject, "MaterialCostComp") |
| 2 | Cost Center | | Material Overhead | MatSC | GetSurchargeAccountforPlant (Receiver.Plant, "Material) | GetCellValue(1, Costs)* |
| | | | | | | GetSurchargePercentage (Receiver.Plant,"Material) |
| 3 | Calculation Row | | Labor Costs | | | CostComponentValue (ReceiverObject, "LaborCostComp") |
| 4 | Cost Center | | Labor Overhead | LabSC | GetSurchargeAccountforPlant (Receiver.Plant, "Labor") | GetCellValue(3, Costs)* |
| | | | | | | GetSurchargePercentage (Receiver.Plant, "Labor") |
| 5 | Calculation Row | | Production Costs | | | SumCellValues(1,4, Costs) |
| 6 | Cost Center | | Admin Overhead | AdmSC | GetSurchargeAccountforPlant (Receiver.Plant, "Admin") | GetCellValue(5, Costs)* |
| | | | | | | GetSurchargePercentage (Receiver.Plant,"Admin") |
| 7 | Cost Center | IF Receiver. ProductType = "Final good" | Sales Overhead | SalSC | GetSurchargeAccountforPlant (Receiver.Plant, "Sales") | GetCellValue(5, Costs)* |
| | | | | | | GetSurchargePercentage (Receiver.Plant, "Sales") |

The Attribute cells, such as the Account and Costs cells, may contain functions to determine needed values of the attributes for the assignments. For example, for the example of Table 2, the following three functions are provided by assignment creation environment: CostComponentValue(), GetSurchargeAccountforPlant(), and GetSurchargePercentage(). The functions GetCellValue() and SumCellValues() retrieve and sum, respectively, values from other cells of the template that are specified by line and column.

In addition, ACE 140 may comprise a deriver 270 to assign one of ACDs 150 to a base BO, which may be a sender BO or receiver BO. The ACD may be identified based on the type of application 130a, 130b that triggered ACE 140. Upon execution, one of applications 130a, 130b selects the base BO as needing an assignment to a partner BO.

The applications 130a, 130b may also pass an identifier of the selected base BO to ACE 140, which uses rules to identify one or more of ACDs 150 that are to be assigned to the base BO based on the attributes of the base BO. These rules may comprise rules and/or filters, and may be stored in the assignment creation environment. A plurality of rules may be defined in relation to a single base BO. For example, each of the rules may be adapted to operate on a base BO that has a particular BO type. Furthermore, each of the rules can use one or more of the attributes of the base BO to assign a particular one of ACDs 150 to that base BO.

Deriver 270 may further identify the ACD based on a directionality of the assignments to be generated. Each of ACDs 150 can be characterized as either sender-based or receiver-based, meaning that the base BO from which each of the particular ACDs 150 is derived is either a sender BO or a receiver BO, respectively. Deriver 270 determines whether the base BO is a sender BO or a receiver BO. If the base BO is a sender BO, then deriver 270 assigns a sender-based ACD. If the base BO is a receiver BO, then deriver 270 assigns a receiver-based ACD. Correspondingly, for a sender-based ACD, the partner BO is a receiver BO; for a receiver-based ACD, the partner BO is a sender BO.

Two examples of rules that assign the ACDs to the base BOs are shown below as Tables 3a and 3b. In this example, rule m operates on base BOs of BO type 1, and rule n also operates on base BOs of BO type 1. However, rule m examines attribute x of the base BO, whereas rule n examines both attribute *y* and attribute z of the base BO. Based on the values of attributes x, *y*, and z, rule m assigns an ACD to the base BO and rule n assigns another ACD to the base BO. For example, a base BO of BO type 1, having attribute x with a value of "x.1," attribute *y* with a value of "Y2," and attribute z with a value of "Z2," would be assigned ACD1 and ACD2.1.

**Table 3a - Rule m for BO type 1**

| **BP Attribute *x*** | **ACD** |
|---|---|
| x.1 | ACD1 |
| x.2 | ACD2 |

**Table 3b - Rule n for BO type 1**

| **BO Attribute *y*** | **BO Attribute *z*** | **ACD** |
|---|---|---|
| Y1 | Z1 | ACD1.1 |
| Y2 | Z2 | ACD2.1 |

ACE 140 may further comprise an evaluator 280 to evaluate ACD 150 on a line-by-line basis. For example, ACE 140 may sequentially read the lines of ACD 150, such as from top to bottom in Table 2 above, and execute each of the lines. ACD 150 may be evaluated to determine the partner BOs. For example, the partner BOs may be determined based on the identifiers or rules in the Object cells.

Evaluator 280 may also evaluate the functions in the Attribute cells to determine values of attributes that will be associated with the generated assignments. These attribute values may be stored in an internal result table before being associated with the assignments that are to be generated between the base BOs and the partner BOs. ACE 140, using ACD 150, may evaluate the formulas using one or more of the attributes of the base BOs and/or the attributes of the partner BOs to determine the values of attributes of the relevant assignment that is to be generated. For example, the formulas may be evaluated to calculate the values of characteristics and key figures.

One or more of the functions in the ACD may refer to tables of the value flow environment to retrieve data, such as to obtain reference data, such as numerical constants. These tables may be managed by the assignment creation environment. An example of such a table, corresponding to the exemplary tables above, is shown as Table 4 below.

**Table 4**

| **Plant** | **Overhead type** | **Account** | **Surcharge Percentage** |
|---|---|---|---|
| 1000 | Material | 610000 | 30 |
| 1000 | Labor | 611000 | 50 |
| 1000 | Admin | 612000 | 15 |
| 1000 | Sales | 613000 | 5 |
| 2000 | Material | 620000 | 35 |
| 2000 | Labor | 621000 | 45 |
| 2000 | Admin | 622000 | 20 |
| 2000 | Sales | 623000 | 10 |

An example of the determined partner BOs and evaluated attribute values, corresponding to the exemplary tables above, is shown in as the internal result table labeled Table 5 below. The results of the non-generation lines (i.e., "Calculation Row" in this example) are shown in the rows that do not list a partner BO. The results of the generation lines (i.e., "Cost Center" in this example) are shown in the rows that do list a partner BO. However, the results from the non-generation lines are incorporated into the calculations that are present in the generation lines and thereby affect the outcome of the assignments that are ultimately generated.

**Table 5**

| **Line ID** | **Partner BO** | **Attribute** | **Value** |
|---|---|---|---|
| 1 | | Costs | 1,000.00 |
| 2 | CC MatSC | Account | 610000 |
| | | Costs | 1,000.00 * 30% = 300.00 |
| 3 | | Costs | 2,000.00 |
| 4 | CC LabSC | Account | 611000 |
| | | Costs | 2,000.00 * 50% = 1,000.00 |
| 5 | | Costs | 1,000+300+2,000+1,000 = 4,300.00 |
| 6 | CC AdmSC | Account | 612000 |
| | | Costs | 4,300.00 * 15% = 645.00 |

ACE 140 comprises a generator 290 to create an assignment between the base BO and each of the partner BOs determined by the evaluator 280. For example, the individual lines may be designated as either generation lines, which generate assignments upon execution, or non-generation lines, which do not generate assignments upon execution. Each of the generated assignments has the attributes whose values have been determined by the evaluator 280. The assignments may also inherit the directionalities that have been determined by deriver 270, meaning that each of the assignments specifies a sender BO and a receiver BO.

ACE 140 may further return the attribute values to the application that triggered ACE 140. For example, the application may further process the assignment results, such as by posting the contents of the assignment results. An example of the assignment results, posted as three line items in a costing journal, is shown as Table 6 below. In this example, three assignments are shown: (i) an assignment between a receiver BO identified as "PO 100000" and a sender BO identified as "CC MatSC," having an Account attribute with a value of 610000 and a Costs attribute with a value of 300.00; (ii) an assignment between the same receiver BO and a sender BO identified as "CC LabSC," having an Account attribute with a value of 611000 and a Costs attribute with a value of 1,000.00; and (iii) an assignment between the same receiver BO and a sender BO identified as "CC AdmSC," having an Account attribute with a value of 612000 and a Costs attribute with a value of 645.00.

**Table 6**

| **Receiver BO** | **Sender BO** | **Attribute** | **Value** |
|---|---|---|---|
| PO 100000 | CC MatSC | Account | 610000 |
| | | Costs | 300.00 |
| | CC LabSC | Account | 611000 |
| | | Costs | 1,000.00 |
| | CC AdmSC | Account | 612000 |
| | | Costs | 645.00 |

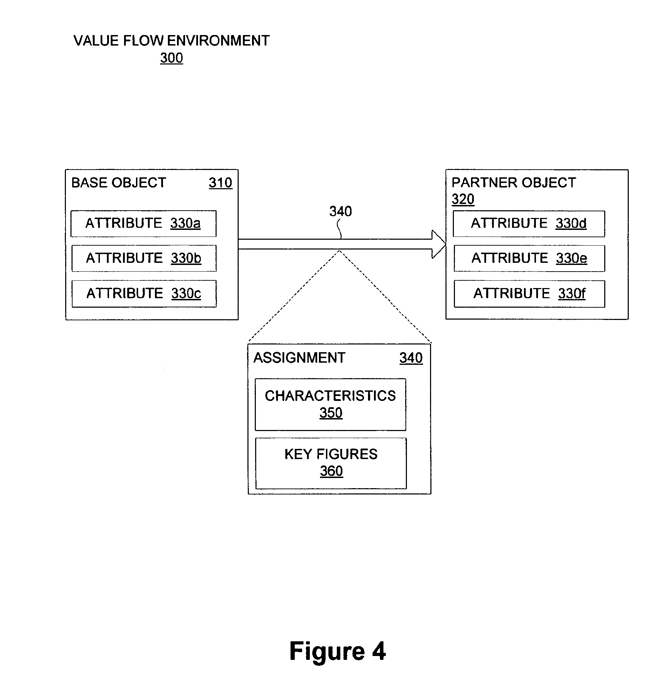

Figure 4 is a schematic diagram, consistent with the present invention, of a portion of an exemplary embodiment of the value flow environment, shown as value flow environment 300. A base BO 310 and a partner BO 320 each comprise attributes 330a-330f. An assignment 340, represented as an arrow, is defined between base BO 310 and partner BO 320. In the example shown, base BO 310 is a sender BO and partner BO 320 is a receiver BO, as indicated by the directionality of the arrow representing assignment 340.

Exemplary data structures of assignment 340, base BO 310, and partner BO 320 are shown in part. In the example of Figure 4, assignment 340 has a set of attributes, which may include characteristics 350 and/or key figures 360. Characteristics 350 may comprise, for example, a name, identification, or account number. Key figures 360 are typically used by businesses to measure performance. Key figures 360 may comprise, for example, a value, currency, price, or other number.

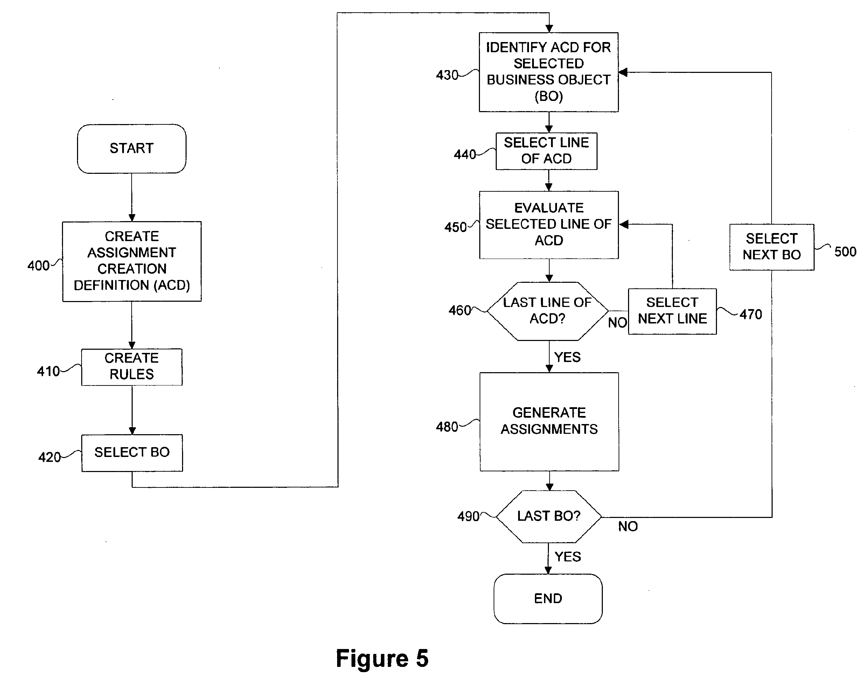

Figure 5 is a flowchart of an exemplary embodiment, consistent with the present invention, of a method of creating an assignment between each of a base BO and at least one partner BO by creating, deriving, and evaluating an ACD. In Figure 3, the rectangular boxes represent processes of the method, whereas the hexagonal boxes represent conditional branches of the method.

When an operator decides to enable the automatic creation of assignments, the operator creates the ACD, as shown by step 400. As described above, the ACD contains lines that are executable in relation to a base BO to identify one or more partner BOs and to determine values of one or more attributes of the assignments. This newly created ACD can be stored for multiple derivation and evaluation steps based on the ACD. The operator next creates the rules that will be used in the derivation process to identify the appropriate ACDs for evaluation, as shown by step 410.

When an application is executed, the application may trigger the ACE to initiate a derivation process that identifies particular ACDs and assigns the ACDs to a plurality of sender and/or receiver BOs. Particular sender and/or receiver BOs may be selected by the application as BOs that should potentially be assigned ACDs . The ACE selects one of those BOs, as shown by step 420, as part of the ACD derivation process. The ACE uses the rules that were previously created to determine which ACD should be assigned to the BO based on the attributes of the BO and the directionality, as shown by step 430.

When an ACD has been derived for the BO, the BO is referred to as a base BO, and the ACD can be evaluated on a line-by-line basis in preparation for generating the assignments between this base BO and partner BOs. The ACE selects a line of the ACD, as shown by step 440. The selected line is evaluated to determine values of attributes of the line, as shown by step 450. If the selected line is not the last line of the ACD, as shown by conditional branch 460, then the evaluation process is repeated for the next line, as shown by step 470. However, if the selected line is the last line of the ACD, then the evaluation process can be terminated.

Based on the results of the evaluation process, assignments can be generated between the base BOs and the partner BOs, as shown by step 480. If the line is a generation line, such as a "Cost Center" line, then an assignment is generated. The assignment may include the attribute having the value determined during the evaluation process. The assignment may further inherit a directionality that is determined based on whether the base BO is a sender BO or a receiver BO.

If the BO is not the only remaining BO to be assigned an ACD, as shown by conditional branch 490, then the ACD derivation process is repeated for the next BO to assign an ACD to that BO, as shown by step 500. However, if the BO is the only remaining BO that should potentially be assigned an ACD, then the derivation process is terminated, as shown in Figure 5.

The methods and systems disclosed herein may be embodied in various forms including, for example, a data processor, such as a computer that also includes a database. Moreover, the above-noted features and other aspects and principles of the present invention may be implemented in various environments. Such environments and related applications may be specially constructed for performing the various processes and operations according to the invention or they may include a general-purpose computer or computing platform selectively activated or reconfigured by code to provide the necessary functionality. The processes disclosed herein are not inherently related to any particular computer or other apparatus, and may be implemented by a suitable combination of hardware, software, and/or firmware. For example, various general-purpose machines may be used with programmable instructions written in accordance with teachings of the invention, or it may be more convenient to construct a specialized apparatus to perform the required methods and techniques.

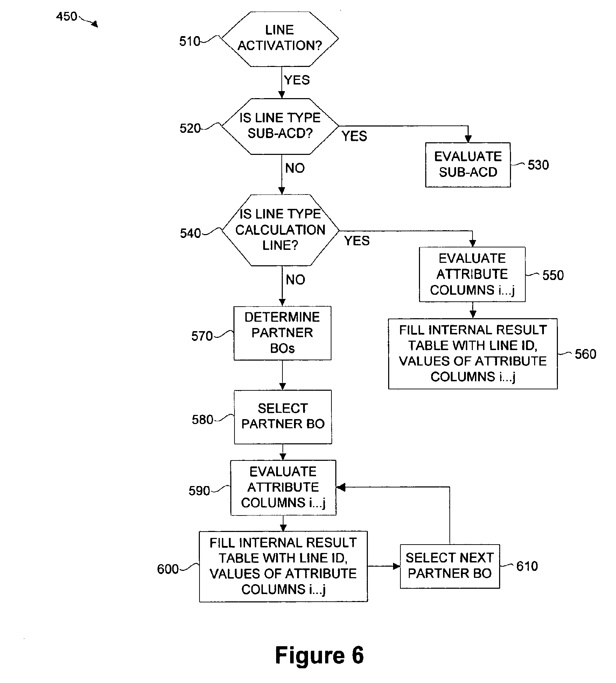

Figure 6 is a flowchart of an exemplary embodiment, consistent with the present invention, of the step of evaluating the selected line to determine values of attributes of the line, labeled as step 440 in Figure 3. The rectangular boxes represent processes of the method, whereas the hexagonal boxes represent conditional branches of the method.

The line is first checked for a Line Activation cell, as shown by step 510. Further evaluation of the line proceeds if either (i) the Line Activation cell is present or (ii) the Line Activation cell is present and the logical expression contained therein returns a TRUE value. If the line type is "Sub-ACD," as shown by conditional branch 520, then the sub-ACD is evaluated, as shown by step 530. Otherwise, if the line type is "Calculation Row," as shown by conditional branch 540, then the Attribute columns (indexed in this example as 'i' through 'j') are evaluated, as shown by step 550. An internal result table is filled with the line ID and the values of the Attribute columns, as shown by step 560.

If the line type is neither "Sub-ACD" nor "Calculation Row," then the line is presumed to be a generation line and partner BOs are determined, as shown by step 570. The first partner BO is selected, as shown by step 580. The Attribute columns are evaluated in relation to that partner BO, as shown by step 590. The internal result table is filled with the line ID and the values of the Attribute columns in relation to that partner BO, as shown by step 600. Steps 590 and 600 are repeated for each of the partner BOs, as shown by step 610.

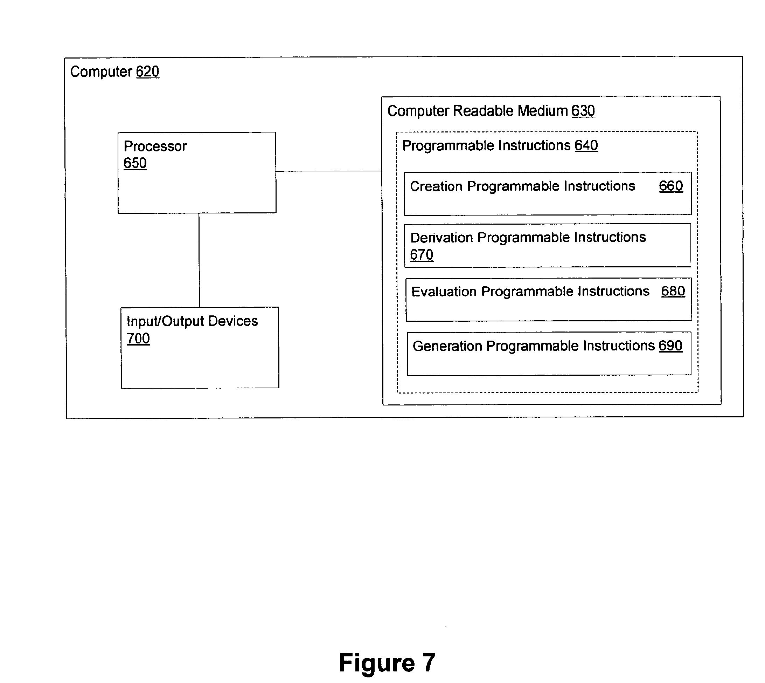

Figure 7 is a block diagram of an exemplary embodiment, consistent with the present invention, of a computer 620 comprising a computer readable medium 630 that contains programmable instructions 640, and a processor 650 to execute programmable instructions 640. Programmable instructions 640 may include creation programmable instructions 660 to create ACDs, derivation programmable instructions 670 to assign the ACDs to base BOs upon triggering by an application, evaluation programmable instructions 680 to evaluate the assigned ACDs to determine partner BOs and values of attributes, and generation programmable instructions 690 to generate assignments, having the attributes, between the base BOs and the partner BOs. Input/output devices 700 may also be provided to communicate with external devices and/or a human operator. Computer 620 of Figure 5 is provided only to illustrate an exemplary embodiment of the invention and, thus, should not be used to limit the scope of the invention or its equivalents. For example, computer 620 may be distributed across a plurality of physically separate computers that are communicatively coupled to one another. Computer readable medium 630 may also be distributed across a plurality of physically separate computer readable media.

An exemplary embodiment of the process of deriving and evaluating ACDs, corresponding to Figures 3 and 4, is illustrated in the following pseudocode:

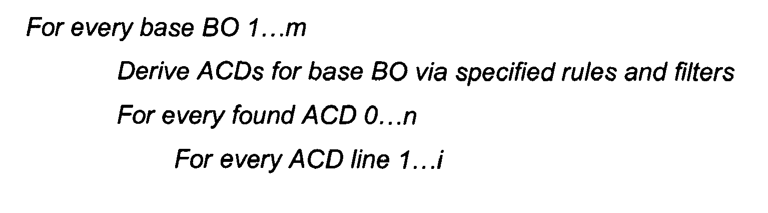

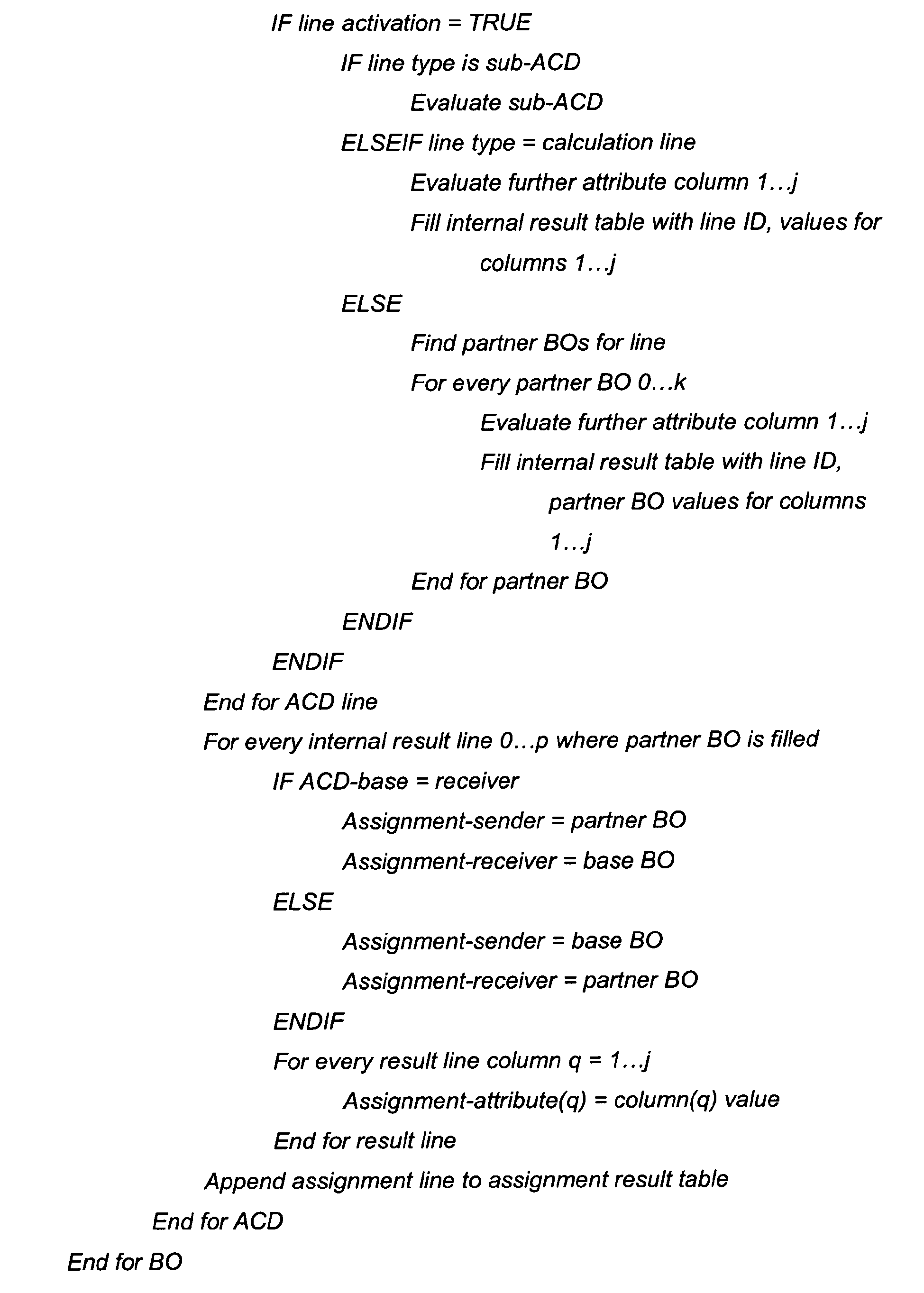

The methods, systems, and computer readable media described herein enable the generation of assignments for particular BOs based on ACDs that have been created as abstract templates. Furthermore, the ACDs can be derived and evaluated based on attributes of either sender BOs, which are the sources of value flows, or receiver BOs, which are the recipients of value flows.

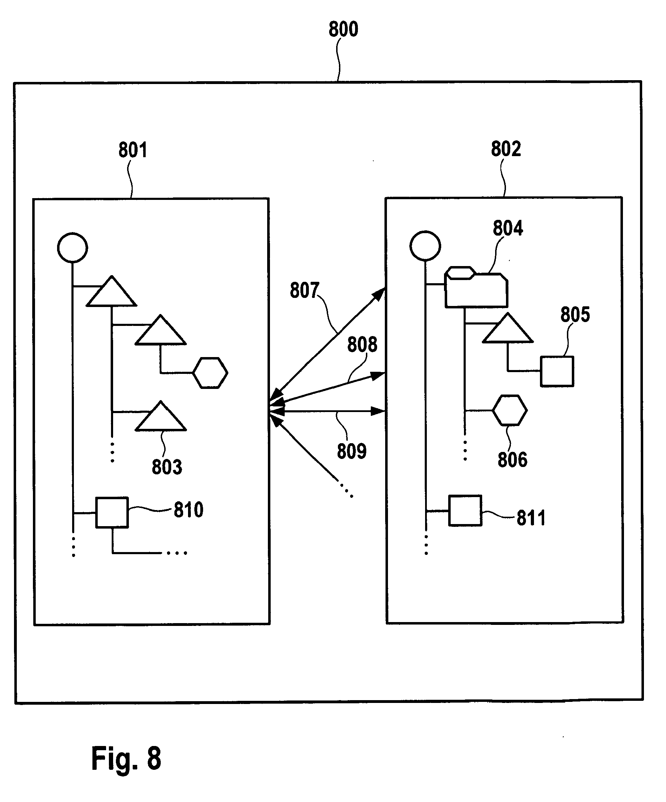

Assignments created by the systems and methods described above may be graphically visualised as shown in figure 8. The display 800 may show a hierarchy of sender objects 801 and a hierarchy of receiver objects 802. A sender object 803 may have assignments created with a number of receiver objects 804, 805, 806. These assignments may be graphically displayed as links 807, 808, 809 between the sender and receiver objects. The different symbols 803, 805, and 806 may represent objects having different types. Objects represented by the same symbols such as 810 and 811 may be objects having the same object type.

The foregoing description of possible implementations and embodiments consistent with the present invention does not represent a comprehensive list of all such implementations or all variations of the implementations described. The description of only some implementations should not be construed as an intent to exclude other implementations or embodiments. One of ordinary skill in the art will understand how to implement the invention in the appended claims in other ways, using equivalents and alternatives that do not depart from the scope of the following claims.

## Claims

1. A method of generating an assignment between a base business object and a partner business object using a common service in a service oriented architecture, the service oriented architecture comprising the common service and a plurality of applications coupled to the common service, , the base business object and the partner business object describing elementary steps in business processes, the method comprising:
receiving a request (1101) at the common service from an application of the plurality of applications, the request comprising:
An identifier of the base business object; and filter information, the filter information including whether the base business object is a sender or a receiver;
identifying whether the base business object is a sender business object or a receiver business object using the filter information to determine a directionality (1102);
reading type and attribute information for the base business object (1103),
identifying an assignment creation definition (1104) using the directionality and the type information for the base business object to identify a rule table and using at least one attribute of the base business object as a key to the rule table, the assignment creation definition comprising a number of lines;
evaluating the identified assignment creation definition (1105) by executing at least one of the number of lines to (i) determine the partner business object and (ii) executing at least one of the number of lines to evaluate a function based on an attribute of the base business object to determine a value of an assignment attribute;
generating an assignment (1106) between the base business object and the partner business object, the assignment comprising the assignment attribute;
returning the assignment (1107) to the application of the plurality of applications as a line in a table, the line in the table comprising data identifying the base business object, data identifying the receiver business object, and the assignment attribute.

2. The method of claim 1, the base object belonging to a first object hierarchy (801)and the partner object belonging to a second object hierarchy (802), the method further comprising the step of displaying the assignment , the step of displaying the assignment comprising:
displaying the first and second object hierarchies (801,082);
displaying an assignment symbol (807;808;809) between the base object (803) and the partner object (804;805;806).

3. The method of claim 1, wherein the base business object is a sender business object, and comprising identifying a sender-based assignment creation definition based on the directionality.

4. The method of claim 1, wherein the base business object is a receiver business object, and comprising identifying a receiver-based assignment creation definition based on the directionality.

5. The method of claim 1, wherein the assignment creation definition comprises a generation line including a rule that refers to the partner business object, and wherein evaluating the assignment creation definition comprises evaluating the rule to identify the partner business object.

6. The method of claim 4, wherein the assignment creation definition comprises a non-generation line including a formula, and wherein evaluating the assignment creation definition comprises evaluating the formula to calculate a numerical value for use by the generation line.

7. The method of claim 1, wherein the assignment creation definition comprises a generation line including a plurality of rules that refer to a plurality of partner business objects, and wherein evaluating the assignment creation definition comprises evaluating the rules to identify the partner business objects.

8. The method of claim 1, wherein the assignment creation definition comprises a unique identifier of the partner business object.

9. The method of claim 1, wherein the value of the assignment attribute comprises a key figure.

10. The method of claim 1, wherein the assignment attribute comprises a characteristic.

11. The method of claim 1, further comprising creating the assignment creation definition.

12. A data processing system for generating an assignment between a base business object and a partner business, the system connected to a plurality of applications (1001;1002) in a service oriented architecture (1000), the system comprising:
a deriver (1008) to identify whether the base business object is a sender business object or a receiver business object to determine a directionality, and identify an assignment creation definition based on an attribute of the base business object and the directionality by comparing at least one attribute of the base business object with a rule table, the assignment creation definition comprising a number of lines;
an evaluator (1011) to evaluate the identified assignment creation definition by executing at least one of the number of lines to (i) determine the partner business object and (ii) executing at least one of the number of lines to evaluate a function based on an attribute of the base business object to determine a value of an assignment attribute a generator (1012) to generate an assignment between the base business object and the partner business objects, the assignment comprising the assignment attribute
means for returning the assignment to the application of the plurality of applications as a line in a table, the line in the table comprising data identifying the base business object, data identifying the receiver business object and the assignment attribute.

13. The system of claim 12, wherein the base business object is a sender business object and the deriver identifies a sender-based assignment creation definition based on the directionality.

14. The system of claim 12, wherein the base business object is a receiver business object and the deriver identifies a receiver-based assignment creation definition based on the directionality.

15. The system of claim 12, wherein the assignment creation definition comprises a generation line including a rule that refers to the partner business object, and wherein the evaluator evaluates the rule to identify the partner business object.

16. The system of claim 15, wherein the assignment creation definition comprises a non-generation line including a formula, and wherein the evaluator evaluates the formula to calculate a numerical value for use by the generation line.

17. The system of claim 12, wherein the assignment creation definition comprises a generation line including a plurality of rules that refer to a plurality of partner business objects, and wherein the evaluator evaluates the rules to identify the partner business objects.

18. The system of claim 12, wherein the assignment creation definition comprises a unique identifier of the partner business object.

19. The system of claim 12, wherein the value of the assignment attribute comprises a key figure.

20. The system of claim 12, wherein the assignment attribute comprises a characteristic.

21. The system of claim 13, further comprising a creator to create the assignment creation definition.

22. The system of claim 12, further comprising a display module to display the assignment.

23. A computer readable medium comprising programmable instructions adapted to perform the method of any of claims 1 to 11.
